(19) Europäisches Patentamt
European Patent Office
Office européen des brevets

(11) Veröffentlichungsnummer: **0 176 774 B1**

(12) **EUROPÄISCHE PATENTSCHRIFT**

(45) Veröffentlichungstag der Patentschrift: **27.12.91**

(51) Int. Cl.[5]: **C08L 71/12**, C08L 87/00, C08L 25/12, C08L 51/00, C08G 81/02, C08K 5/49

(21) Anmeldenummer: **85110926.4**

(22) Anmeldetag: **30.08.85**

# (54) Halogenfreie, selbstverlöschende thermoplastische Formmasse.

(30) Priorität: **06.09.84 DE 3432749**

(43) Veröffentlichungstag der Anmeldung:
**09.04.86 Patentblatt 86/15**

(45) Bekanntmachung des Hinweises auf die Patenterteilung:
**27.12.91 Patentblatt 91/52**

(84) Benannte Vertragsstaaten:
**BE DE FR GB IT NL**

(56) Entgegenhaltungen:
**EP-A- 0 048 391**
**EP-A- 0 075 233**
**DE-A- 3 402 791**
**US-A- 4 198 492**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Muench, Volker, Dr.**
**Luitpoldstrasse 114**
**W-6700 Ludwigshafen(DE)**
Erfinder: **Hambrecht, Juergen, Dr.**
**Werderstrasse 30**
**W-6900 Heidelberg(DE)**
Erfinder: **Echte, Adolf, Dr.**
**Leuschnerstrasse 42**
**W-6700 Ludwigshafen(DE)**

EP 0 176 774 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine halogenfreie, selbstverlöschende thermoplastische Formmasse aus einem halogenfreien thermoplastischen Harz (A) auf der Grundlage von Styrol und Acrylnitril, im allgemeinen einem Elastomeren (B) mit einer Glastemperatur unterhalb von 0° C, das gegebenenfalls in Form eines Pfropfmischpolymerisates aus Styrol und Acrylnitril vorliegt, mindestens einem weiteren halogenfreien thermoplastischen Harz (C) und mindestens einer Phosphor enthaltenden Verbindung als Flammschutzmittel.

Formmassen der vorstehend angegebenen Art ergeben sich u. a. aus den folgenden Druckschriften:

(1) Vogel, "Flammfestmachen von Kunststoffen", Hüthig-Verlag, Heidelberg (1966), Seiten 94 bis 102,

(2) Troitzsch, "Brandverhalten von Kunststoffen", Hanser-Verlag, München (1982), Seiten 1 bis 65,

(3) Hirschler, in "Developments in Polymer Stabilization", Band 5, Editor G. Scott, Applied Science Publishers, London (1982), Seiten 107 bis 151.

(4) DE-OS 30 19 617

(5) DE-OS 30 02 792

(6) US-PS 3 383 435

(7) US-PS 4 360 618

(8) DE-A-34 01 835

Die Flammfestausrüstung von thermoplastischen Kunststoffen ist aus (1), (2) und (3) bekannt. Man weiß auch, daß bei Anwendung verhältnismäßig großer Mengen an Halogen enthaltenden Flammschutzmitteln und unter gleichzeitiger Anwendung von Synergisten Thermoplaste nach dem Beflammen mit einer heißen Flamme nichtbrennend abtropfen und von selbst verlöschen.

Außer der vorstehend angeführten Möglichkeit, thermoplastische Kunststoffe mit Halogen enthaltenden Flammschutzmitteln auszurüsten, gibt es auch die Möglichkeit eines halogenfreien Flammschutzes. So können beispielsweise Mischungen aus Poly(2,6-dimethyl-1,4-phenylen)ether (PPE) und schlagzähmodifiziertem Polystyrol (HIPS) durch Phosphor enthaltende organische Verbindungen flammfest ausgerüstet werden. Bezogen auf HIPS werden 50 bis 60 Gew.% von PPE + Phosphorverbindungen zugesetzt [vgl. (4) und (5)].

Mischungen von Poly(phenylen)oxid (PPE) mit Styrol-Polymeren werden in (6) beschrieben. Dabei wird das PPE mit Homopolystyrol (PS), Styrol-Acrylnitril-Butadien-Polymeren (ABS) und/oder elastomer-modifiziertem Polystyrol (HIPS) versetzt. Das Hauptinteresse gilt dabei Abmischungen mit HIPS, da letztere physikalische Eigenschaften haben, die sie für die Herstellung von durch Schmelzeverarbeitung erhaltenen Formteilen besonders geeignet erscheinen lassen.

Abmischungen von PPE mit Acrylnitril (AN) enthaltenden Polymeren wie SAN und ABS, sind bisher nicht bevorzugt worden, da die Eigenschaften der Formkörper weit unter den erwarteten Werten liegen, so daß sie nicht kommerziell anwendbar sind. Blends mit üblichen SAN-Polymeren, welche 25 bis 35 % AN enthalten, haben dann sehr schlechte mechanische und thermische Eigenschaften.

Wie sich gezeigt hat, lassen sich z.B. SAN/PPE- oder ABS/PPE-Mischungen, welche in den SAN- oder ABS-Komponenten einen Nitrilmonomergehalt von >8 Gew.% enthalten, nicht in der vorstehend angegebenen Weise. d.h. mit Phosphorverbindungen allein, flammfest ausrüsten.

In (8) schließlich, ist die halogenfreie Ausrüstung von thermoplastischen Kunststoffen, z.B. von SAN bzw. ABS, mit Hilfe eines Systems aus einer N-enthaltenden Verbindung, einem Phenol-Aldehyd-Harz und einer Phosphor enthaltenden organischen Verbindung beschrieben.

Die Anwendung halogenfreier Flammschutzmittel führt bei SAN/PPE- und ABS/PPE-Mischungen zu einer starken Erhöhung der Fließfähigkeit und einer drastischen Erniedrigung der Wärmeformbeständigkeit. Daher tropfen die halogenfrei flammfest ausgerüsteten Formteile aus SAN/- und ABS/PPE-Mischungen beim Beflammen brennend ab. Gerade letzteres kann aber, aus dem Fachmann einsichtigen Gründen, nicht toleriert werden.

Es bestand daher weiterhin die Aufgabe, ein halogenfreies Flammschutzmittelsystem zu entwickeln, bei dem die vorstehend genannten Nachteile nicht auftraten. Dieses halogenfreie Flammschutzmittelsystem sollte außerdem auch das Erreichen der Einstufung UL 94 V1 und UL 94 V0 bewirken.

Zusätzlich sollte das halogenfreie Flammschutzmittelsystem das brennende und auch das nichtbrennende Abtropfen beflammter Formmassen verhindern.

Es hat sich gezeigt, daß die Verwendung bestimmter Kamm-Polymerer, nämlich solcher, bei denen die Hauptkette ein Styrol-Terpolymer darstellt, das Polyphenylenether-Seitenketten trägt, deutlich günstigere Ergebnisse liefert als der Stand der Technik.

Danach sind, nämlich aus der US-PS 4 198 492, Kamm-Polymere als Bestandteil selbstverlöschender Formmassen bekannt, bei denen die Hauptkette ein Polyphenylenether ist, während die Seitenketten aus

Copolymeren des Styrols gebildet sind.

Die Aufgabe wird gelöst durch eine halogenfreie, flammgeschützte, thermoplastische Formmasse der eingangs genannten Art, die enthält oder vorzugsweise besteht aus (jeweils bezogen auf die Summe von 100 Gew.% aus A, B, C, D und E)

A mindestens 3 Gew.% mindestens eines halogenfreien thermoplastischen Harzes, das, bezogen auf A, einpolymerisiert enthält

$a_1$) 60 bis 85 Gew.% mindestens eines vinylaromatischen Monomeren mit 8 bis 9 C-Atomen und

$a_2$) 40 bis 15 Gew.% von Acrylnitril,

B bis zu 40 Gew.% eines Elastomeren mit einer Glastemperatur unterhalb von 0 °C, das gegebenenfalls in Form eines Pfropfmischpolymerisates gebildet aus Monomeren $a_1$) und $a_2$) der Komponente A vorliegt,

C mindestens 3 Gew.% eines thermoplastischen Polyphenylenethers,

D 0.5 bis 40 Gew.% mindestens einer organischen oder anorganischen, Phosphor enthaltenden Verbindung, in der der Phosphor die Wertigkeitsstufe -3 bis +5 besitzt (Flammschutzmittel), sowie

E mindestens 0,3 Gew.% mindestens eines Copolymerisates, das zu 20 bis 85 Gew.% aus einer Hauptkette und zu 15 bis 80 Gew.% mindestens einer daran durch Kondensation angefügten Seitenkette besteht, wobei das Gesamtmolekulargewicht $M_w$ des Copolymerisates 7000 bis 10 Mio, das der Hauptkette 10 000 bis 1 Mio und das der Seitenkette(n) jeweils ein solches von 2000 bis 22 000 aufweisen, jeweils bestimmt durch Gelpermeationschromatographie,

wobei ferner die Hauptkette ein Terpolymerisat darstellt, das einpolymerisiert enthält:

$e_a$) mindestens 60 Gew.% mindestens eines vinylaromatischen Monomeren mit 8 oder 9 C-Atomen,

$e_b$) 40 bis 9 Gew.% Acrylnitril,

$e_c$) 0,3 bis 10 Gew.% mindestens eines Monomeren aus der Gruppe der Ester der Acrylsäure und Methacrylsäure, die zur Etherbildung befähigte Alkoholreste enthalten,

und wobei jede Seitengruppe mindestens einen Polyphenylenetherrest (PPE) aufweist, der jeweils über den Rest X eines mindestens bifunktionellen Kupplungsmittels an das (die) zur Etherbildung befähigte(n) Monomere(n) $e_c$) gebunden ist derart, daß sich für die Seitengruppe eine Struktur der Form -X-PPE ergibt.

Nachstehend wird der Aufbau der erfindungsgemäßen Formmasse aus den Komponenten und deren Herstellung beschrieben.

Am Aufbau der Formmasse sind die Komponenten (A) bis (E) beteiligt, d.h. die Summe der vorstehenden Mengenangaben der 5 Komponenten beträgt jeweils 100 Gew.%. Jede der Komponenten (A) bis (E) ist an sich bekannt. Neu und erfinderisch ist der Vorschlag, durch die Kombination der Komponenten (D) und (E) in der Mischung aus (A) + (C) und gegebenenfalls (B) einen Effekt des Selbstverlöschens zu erzielen, der bei einer Anwendung der Komponente (D) oder (E) alleine nicht erzielbar ist.

Die erfindungsgemäße Formmasse besteht zu

1. mindestens 3 Gew.%, insbesondere 3 bis 60 Gew.% und vorzugsweise 3 bis 50 Gew.% der Komponente (A),

enthält gegebenenfalls

2. bis zu 40 Gew.%, insbesondere 4 - 30 Gew.% und vorzugsweise 10 - 25 Gew.% der Komponente (B),

3. 97 - 3 Gew.%, insbesondere 60 - 10 Gew.% und vorzugsweise 50 - 20 Gew.% der Komponente (C),

4. 0,5 - 40 Gew.%, insbesondere 1 - 30 Gew.% und vorzugsweise 2 - 25 Gew.% der Komponente (D),

5. 0,3 - 95 Gew.%, insbesondere 1 - 60 Gew.% und vorzugsweise 3 - 20 Gew.%, der Komponente (E).

## Komponente A

Bei der Komponente A der erfindungsgemäßen Formmasse handelt es sich um ein thermoplastisches Harz, das, bezogen auf A, einpolymerisiert enthält:

$a_1$) 60 - 85 % mindestens eines vinylaromatischen Monomeren mit 8 oder 9 C-Atomen

$a_2$) 40 - 15 % mindestens eines ungesättigten Nitrils.

Als Bestandteil ($a_1$) der Komponente (A) kommen Styrol, α-Methylstyrol, p-Methylstyrol oder Gemische davon in Betracht, besonders bevorzugt wird Styrol allein eingesetzt.

Als Bestandteil ($a_2$) der Komponente (A) wird vorzugsweise Acrylnitril (AN) eingesetzt.

Das Styrolcopolymerisat (SAN) wird in bekannter Weise in Lösung, Emulsion oder Masse kontinuierlich

oder diskontinuierlich hergestellt. Die Durchschnittsmolekulargewichte (Gewichtsmittel $\overline{M}_w$), bestimmt durch Gelpermeationschromatographie, liegen bevorzugt von 20.000 bis 1 Mio, Falls die Komponente A schlagzäh modifiziert wird, enthält diese die Komponente C, einen Kautschuk, in Form eines Pfropfmischpolymerisates aus den Monomeren $a_1$ und $a_2$ als Pfropfhülle und vorzugsweise Poly(butadien) als Pfropfgrundlage.

Komponente B

Zur Schlagzähmodifizierung der Komponente A der erfindungsgemäßen Formmasse werden Kautschuke [Komponente (B)] eingesetzt.

Der Kautschuk (B) soll eine Glastemperatur [nach K.H, Illers und H. Breuer, Kolloid-Zeitschrift 176, (1961) Seite 110] haben, die unter 0° C liegt. Als Kautschuk kommen beispielsweise in Frage: Polybutadien (vgl. DE-OS 14 20 775 und DE-OS 14 95 089) Polyacrylate von Estern der Acrylsäure mit 2 bis 8 C-Atomen im Alkoholrest oder Copolymerisate aus überwiegend Butadien und Styrol bzw. solche von Butadien und Estern der Acrylsäure mit 2 bis 8 C-Atomen im Alkoholrest.

Zur Herstellung von schlagzähen Copolymerisaten der Komponente (B) benötigt man gepfropfte Kautschuke, bevorzugt auf Basis Polybutadien. Als solche kommen in Frage Pfropfmischpolymerisate, welche in Anteilen von 5 bis 50 Gew.%, insbesondere von 10 bis 45 Gew.%, jeweils bezogen auf die Komponente (B), angewendet werden.

Diese Pfropfmischpolymerisate sind aufgebaut aus, bezogen auf das Pfropfmischpolymerisat, 10 bis 50 Gew.%, vorzugsweise 15 bis 45 Gew.%, eines Gemisches aus mindestens einem vinylaromatischen Monomeren $a_1$, das bis 8 oder 9 Kohlenstoffatome enthält, und 0.1 bis 25 Gew.%, vorzugsweise 5 bis 20 Gew.%, Acrylnitril $a_2$) als Pfropfhülle, auf 50 bis 90 Gew.%, insbesondere 50 bis 75 Gew.%, der elastomeren Pfropfgrundlage (Kautschuk).

Die Herstellung der Pfropfmischpolymerisate (B) ist an sich bekannt, Sie können z.B. hergestellt werden durch Polymerisation eines Gemisches von bevorzugt Styrol und AN in Gegenwart von Polybutadien in Emulsion, wobei in bekannter Weise eine Teilchenvergrößerung vorgenommen werden kann.

Die Komponente (B) kann zusammen bzw. gleichzeitig mit der Komponente A der erfindungsgemäßen Formmasse hergestellt werden.

Als Pfropfkautschuke (B) kommen somit in Frage:

$B_1$: 75 % Polybutadienkautschuk, gepfropft mit 25 % Styrol/Acrylnitril im Verhältnis (75/25);
$B_2$: 75 % Polybutadienkautschuk, gepfropft mit 25 % Styrol/Acrylnitril im Verhältnis (83/17);
$B_3$: 75 % Polybutadienkautschuk, gepfropft mit 25 % Styrol/Acrylnitril im Verhältnis (70/30);
$B_4$: 75 % Polybutadienkautschuk, gepfropft mit 25 % Styrol/Acrylnitril im Verhältnis (70/30);
$B_5$: 75 % eines Kautschuks aus 60 Teilen Acrylsäurebutylester und 40 Teilen Butadien, gepfropft mit 25 % Styrol/Acrylnitril im Verhältnis (40/30);
$B_6$: 75 % Polyubutadienkautschuk, gepfropft mit 25 % Styrol/Acrylnitril im Verhältnis (70/30);
$B_7$: 60 % Polyubutadienkautschuk, gepfropft mit 40 % Styrol/Acrylnitril im Verhältnis (63/35);

Komponente C

Bei der Komponente (C) der erfindungsgemäßen Formmasse handelt es sich um thermoplastische Poly(phenylen)ether (PPE).

Die Poly(phenylen)ether (PPE) werden nach den bekannten Verfahren aus Phenolen durch oxidative Kupplung hergestellt, wie es z.B. beschrieben ist in den US-Patentschriften 3 306 879, 3 914 266, 3 956 442, 2 965 069, 3 972 851, 3 496 236, 3 367 978 und 4 140 675.

Bevorzugte Poly(phenylen)ether haben die allgemeine Formel (I)

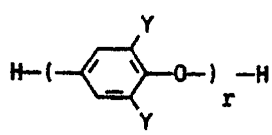

(I)

in der stehen für:

r eine ganze Zahl im Bereich von 20 bis 200, vorzugsweise 30 bis 100, monovalente Substituenten, wie Wasserstoff oder Kohlenwasserstoffreste ohne ein tertiäres Kohlenstoffatom in alpha-Position, die gegebenenfalls über ein Sauerstoffatom an den Phenylkern gebunden sein können.

Beispielsweise seien genannt: Poly-(2,5-dilauryl-1,4-phenylen)ether, Poly-(1,6-diphenyl-1,4-phenylen)-

ether, Poly-(2,6-dimethoxi-1,4-phenylen)ether, Poly-(2-methoxi-6-ethoxi-1,4-phenylen)ether, Poly-(2-ethyl-6-stearyloxi-1,4-phenylen)ether, Poly-(2-methyl-6-methyl-6-phenyl-1,4-phenylen)ether, Poly-(2,6-dibenzyl-1,4-phenylen)ether, Poly-(2-ethoxi-1,4-phenylen)ether. Ebenfalls geeignet sind Copolymere von verschiedenen Phenolen, wie 2,6-Dimethylphenol und 2,3,6-Trimethylphenol.

Besonders bevorzugt als Komponente (C) für die Herstellung der erfindungsgemäßen Formmasse sind solche, bei denen beispielsweise y = Alkyl mit 1 bis 4 C-Atomen, wie Poly-(2,6-dimethyl-1,4-phenylen)ether, Poly-(2,6-diethyl-1 ,4-phenylen)ether, Poly-(2-methyl-6-ethyl-1,4-polyphenylen)ether, Poly-(2-methyl-6-proyl-1,4-polyphenylen)ether, Poly-(2,6-di-propyl-1,4-phenylen)ether und Poly-(2-ethyl-6-propyl-1,4-phenylen)-ether.

Die Poly(phenylen)ether (PPE) für die Komponente (C) werden nach den bekannten Verfahren aus Phenolen durch oxidative Kupplung hergestellt, wie es z.B. beschrieben ist in den US-Patentschriften 3 306 879, 3 914 266, 3 956 442, 2 965 069, 3 972 851, 3 496 236, 3 367 978 und 4 140 675.

Komponente D (Flammschutzmittel)

Bei der Komponente (D) handelt es sich um organische und anorganische Phosphor enthaltende Verbindungen, in denen der Phosphor die Wertigkeitsstufe -3 bis +5 besitzt.

Unter der Wertigkeitsstufe soll der Begriff "Oxidationsstufe" verstanden werden, wie er im Lehrbuch der Anorganischen Chemie von A.F. Hollemann und E. Wiberg, Walter de Gruvter und Co. (1964, 57. bis 70. Auflage), Seite 166 bis 177 (21), wiedergegeben ist.

Phosphorverbindung der Wertigkeitsstufen -3 bis +5 leiten sich von Phosphin (-3), Diphosphin (-2). Phosphinoxid (-1), elementarem Phosphor (±0), hypophosphoriger Säure (+1), phosphoriger Säure (+3), Hypodiphosphorsäure (+4) und Phosphorsäure (+5) ab.

Beispiele für Phosphorverbindungen der Phosphin-Klasse, die die Wertigkeitsstufe -3 aufweisen, sind aromatische Phosphine wie Triphenylphosphin, Tritolylphosphin. Trisnonylphosphin, Trinaphthylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphinverbindungen der Wertigkeitsstufe -1 leiten sich vom Phosphinoxid ab. Beispiele sind Triphenylphosphinoxid, Tritolylphosphinoxid. Trisnonylphosphinoxid, Trisnaphthylphosphinoxid, Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Die Salze enthalten Kationen der Elemente aus der I., II. und III. Hauptgruppe und der I. bis VIII. Nebengruppe des periodischen Systems (s. Lehrbuch "Anorganische Chemie" von F.A. Cotton, G. Wilkinson, Verlag Chemie (1967) (22)). Beispiele sind Calciumhypophosphit und Magnesiumhypophosphit. Des weiteren kommen Doppelhypophosphite mit der Struktur $CeMe(H_2PO_2)_6$ in Frage, wobei Me = Erbium, Thalium, Ytterbium Lutetium sein kann. Es können auch komplexe Hypophosphite verwendet werden, wie beispielsweise $Me[Zr(H_2PO_2)_6]$, $Me[Hf(H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z.B. Cellulosehypophosphitester, Polyvinylalkoholhypophosphitester, Ester der hypophosphorigen Säure mit Diolen, wie z. B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid, Naphthylphenylphosphinsäureanhydrid oder Phenylmethylphosphinsäureanhydrid. Es kommen aber auch Verbindungen wie Hydrochinon-, Ethylenglykol-, Propylenglykol-bis-(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphisäure)ester.

Phosphorverbindungen der Oxidationsstufe +3 leiten sich von der phosphorigen Säure ab. Beispiele sind in US-PS 3 090 799 und 3 141 032 beschrieben. Besonders geeignet sind cyclische Phosphonate wie z.B.

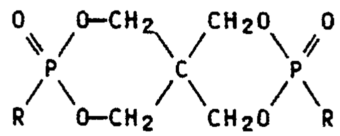

mit R = $CH_3$ und $C_6H_5$, die sich vom Pentaerythrit ableiten,

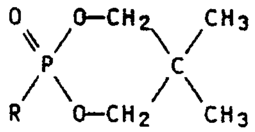

mit R = $CH_3$ und $C_6H_5$, die sich vom Neopentylglykol ableiten und

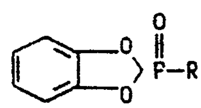

mit R = $CH_3$ und $C_6H_5$, die sich vom Brenzkatechin ableiten.

Ferner ist Phosphor der Wertigkeitsstufe +3 in Triaryl(alkyl)phosphiten, wie Triphenylphosphit, Tris(nonylphenyl)phosphit, Tris(2,4-di-tert.-butylphenyl)phosphit oder Phenyldidecylphosphit u.a. enthalten. Es Können aber auch Diphosphite, wie z.B. Propylenglykol-1,2-bis(diphosphit) oder cyclische Phosphite, wie

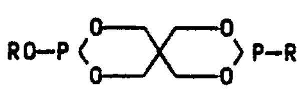

R = $CH_3$ und $C_6H_5$, die sich vom Pentaerythrit ableiten,

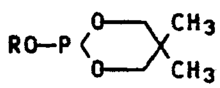

mit R = $CH_3$ und $C_6H_5$, die sich vom Neopentylglykol ableiten und

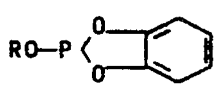

mit R = $CH_3$ und $C_6H_5$, die sich vom Brenzkatechin ableiten, in Frage.

Ganz besonders bevorzugt werden Methylneopentylphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder

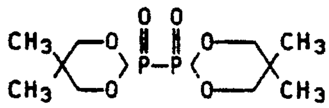

Bisneopentylhypodiphosphat

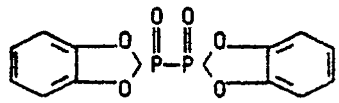

Bisbrenzkatechinhypodiphosphat

in Betracht. Bevorzugt wird Bisneopentylhypodiphosphat.

Als Phosphorverbindungen der Oxidationsstufe +5 kommen vor allem alkyl-und arylsubstituierte Phosphate in Betracht. Beispiele sind Phenylbisdodecylphosphat, Phenylneopentylphosphat, Phenylethylhydrogenphosphat, Phenyl-bis(3,5,5-trimethylhexyl)phosphat, Ethyldiphenylphosphat, 2-Ethylhexyldi(tolyl)-phosphat, Diphenylhydrogenphosphat, Bis(2-ethylhexyl)-p-tolylphosphat, Tritolylphosphat, Bis(2-ethylhexyl)-p-tolylphosphat, Tritolylphosphat, Bis(2-ethylhexyl)phenylphosphat, Di(nonyl)phenylphosphat, Phenylmethylhydrogenphosphat, Di(dodecyl)-p-tolylphosphat, Tricresylphosphat, Triphenylphosphat, Dibutylphenylphosphat, p-Tolyl-bis(2,5,5-trimethylhexyl)phosphat, 2-Ethylhexyldiphenylphosphat. Besonders geeignet sind Phosphorverbindungen, bei denen jeder Rest R ein Aryloxi-Rest ist. Ganz besonders geeignet ist dabei Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymere, organische Phosphorverbindungen mit Phosphor in der Polymerkette entstehen beispielsweise bei der Herstellung von pentacyclischen, ungesättigten Phosphindihalogeniden, wie es beispielsweise in der DE-OS 20 36 174 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)phosphinsäuren,wie z.B. Poly-[natrium(I)-methylphenylphosphinat], Poly[Zn(II)-dibutyl-co-dioctylphosphinat], Poly[Al(III)-tris(diphenyl)-phosphinat] oder Poly[Co(II)-Zn(II)-bis(dioctyl)phosphinat], eingesetzt werden. Ihre Herstellung wird in DE-OS 31 40 520 (26) angegeben, Der Phosphor besitzt die Oxidationszahl +1.

Weiterhin können solche polymeren Phosphorverbindungen durch die Reaktion eines Phosphonsäurechlorids, wie z.B. Phenyl-, Methyl-, Propyl-, Styryl-und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder 1,4'-Dihydroxy-diphenylsulfon entstehen (vgl. US 3 719 272 und W. Sørensen und T.W. Champbell, "präparative Methoden der Polymeren-Chemie", Verlag Chemie, Weinheim, 1962, 123). Die inhärenten Viskositäten dieser Polymere sollen in einem Bereich von

$$\frac{\ln \eta_{rel}}{c} = 0{,}02 \text{ bis } 0{,}4,$$

vorzugsweise im Bereich von

$$\frac{\ln \eta_{rel}}{c} = 0{,}03 \text{ bis } 0{,}2,$$

liegen.

Weitere polymere Phosphorverbindungen, die in den erfindungsgemäßen Polymerisaten enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Org. Phosphorverbindungen, Teil II

(1963). In Frage kommt aber auch das anorganische Poly(ammoniumphosphat).

Es können aber auch oligomere Pentaerythritphosphite, -phosphate und -phosphonate gemäß EP-PS 8 486 der allgemeinen Formeln II, III, IV angewendet werden:

II 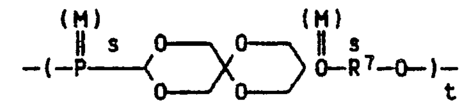

mit s = 0 oder 1 und
t = 2 bis 500
y = 0,5
M = 0,5

III 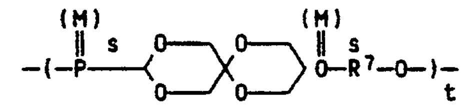

mit s = 0 oder 1 und
t = 2 bis 500
y = 0,5
M = 0,5

IV 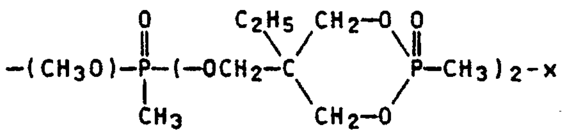

mit x = 0 oder 1,

Mobil Antiblaze 19®

worin $R^7$ =
$-(-CH_2-)-_2$
$-(-CH_2-)-_3$

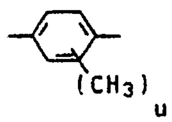

mit u = 0 bis 4,

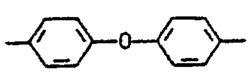

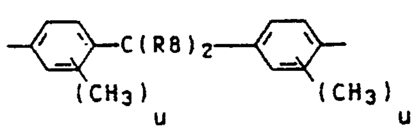

mit u = 0 bis 4
und $R^8$ = $C_1$- bis
$C_4$-Alkyl oder H

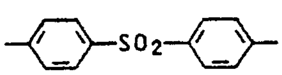

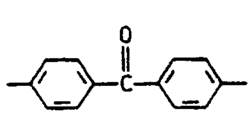

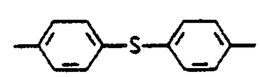

Die Aufzählung dient der Illustration der Erfindung und beinhaltet keine Einschränkung.

Ganz besonders bevorzugt zum Einsatz gelangen Triphenylphosphinoxid, Triphenylphosphat, Dimethylpentaerythritdiphosphonat und Methylneopentylphosphat und Mobil Antiblaze 19®.

Komponente E

Bei der Komponente E handelt es sich um Copolymerisate, die aus einer Hauptkette und mindestens einer daran durch Kondensation angefügten Seitenkette bestehen.

Schema

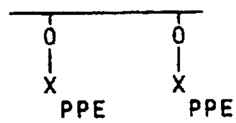

Hauptkette

Seitenketten

Die Verknüpfung von Haupt- und Seitenkette(n) erfolgt über Monomere besonderer Art, die in der Hauptkette einpolymerisiert sind und die eine Seitengruppe tragen, die verethert werden kann. Z.B. werden bevorzugt HO-Alkylgruppen aufweisende Monomere, so daß nach der Kondensation der Rest -X- eines bifunktionellen Kupplungsmittels an die die Seitengruppe repräsentierenden Poly(phenylen)ether, PPE, (als Gesamtgruppe -XPPE) in der Form -O-X-PPE gebunden ist.

Die Hauptkette des Copolymerisats ist ein Terpolymerisat, das einpolymerisiert enthält, jeweils bezogen auf die Hauptkette.

$e_a$: 91 - 60 Gew.% mindestens eines monovinylaromatischen Monomeren mit 8 oder 9 C-Atomen

$e_b$: 9 - 40 Gew.% Acrylnitril

$e_c$: 0.3 - 10 Gew.% mindestens eines Monomeren aus der Gruppe der Ester, der Acryl- und Methacrylsäure, die zur Esterbildung befähigte Alkoholreste enthalten.

Als Monomere $e_a$ kommen Styrol oder kern- bzw. seitenkettenalkylierte Vertreter, wie p-Methylstyrol bzw. $\alpha$-Methylstyrol, oder Mischungen daraus in Betracht. Bevorzugt wird Styrol allein angewendet.

Als Monomere $e_c$, für die Herstellung der Verbindung zu den Seitenketten werden vorzugsweise Hydroxialkyl-(meth)acrylate und -(meth)acrylamide verwendet. Besonders geeignet sind Hydroxiethyl(meth)-acrylat, Hydroxipropyl-(meth)acrylat, Hydroxibutyl-(meth)acrylat, Hydroxipentyl-(meth)acrylat, Hydroxihexyl-(meth)acrylat. Hydroxidecyl-(meth)acrylat, Diethylenglykolmono-(meth)acrylat, Triethylenglykolmono-(meth)-acrylat, Tetraethylenglykolmono-(meth)-acrylat, Dipropylenglykolmono-(meth)acrylat, Tripropylenglykolmono-(meth)acrylat, außerdem Hydroximethylstyrol. Es können auch Gemische eingesetzt werden.

Das massenmittlere Molekulargewicht $\overline{M}_w$ der Hauptkette des Copolymeren beträgt 5000 bis 1 Mio., insbesondere 10000 bis 1 Mio., jeweils bestimmt durch Gelpermeationschromatographie. Das Gesamtmolekulargewicht des Copolymerisats beträgt 7000 bis 10 Mio. ($\overline{M}_w$ Gelp.).

Das Copolymerisat E besteht zu 20 - 85 Gew.%. vorzugsweise 40- bis 75 Gew.% aus der Hauptkette, demzufolge machen die Seitenketten 15 - 80 Gew.%, insbesondere 25 - 60 Gew.% aus. (Der Rest des Kopplungsmittels ist hierbei vernachlässigt)

Das im Copolymerisat E in den Nebenketten enthaltende PPE ist vorzugsweise der Poly(2,6-dimethyl-1,4-phenylen)-ether der Formel I (vgl. Komponente C; Y = $CH_3$, und die dort genannten Verfahren zu seiner Herstellung). Der bevorzugte Polymerisationsgrad des PPE liegt bei n = 20 - 200, besonders bei n = 30 - 100, was einem massenmittleren Molgewicht $\overline{M}_w$ von 2000 bis 22000 bzw. von 3000 bis 11000 entspricht (Bestimmung durch die Gelpermeationschromatographie). Dies entspricht ferner einer intrinsischen Viskosität [$\eta$] von 0,5 - 0,63 dl/g (gemessen in Chloroform).

Bei der Gruppe X handelt es sich um einen Rest eines mindestens bifunktionellen Kopplungsmittels aus einer organischen oder anorganischen Verbindung.

Beispielhaft für bevorzugte Kopplungsmittel seien genannt: Adipinsäuredichlorid, Terephthalsäuredichlorid, Trimesoyldichlorid, Trimellitsäuredichlorid, Oxalsäuredichlorid, Pimelinsäuredichlorid, Glutarsäuredichlorid, Benzophenontetracarbonsäuredichlorid, Oxidiacetyldichlorid, Oxibenzoyldichlorid, Sebacinsäuredichlorid und Azealinsäuredichlorid, außerdem Phosgen. Andere bevorzugte Kopplungsmittel sind Phosphor oder Schwefel enthaltende Säurehalogenide wie Sulfuryldichlorid, Phosphoroxidtrichlorid, Alkyl- Aryl- und Arylalkylphosphordichloride. Besonders geeignet sind auch Silicium oder Bor enthaltende Säurechloride, beispielhaft seien genannt Dialkyl-, -aryl- und alkylaryldichlorsilane, Dialkoxi- -aryloxi- oder - arylalkyloxidichlorsilane, Methyltrichlorsilan, Ethyltrichlorsilan, Amyltrichlorsilan, Vinyltrichlorsilan. Die Kopplungsmittel können auch in Gemischen eingesetzt werden.

Besonders bevorzugte Gruppen X sind demnach Gruppen, wie beispielsweise

Alkyl-Si-Alkyl, Aryl-Si-Aryl oder Alkyl-O-Si-O-Alkyl.

Die Aufzählung dient der Illustration und beinhaltet keine Einschränkung.

An das Kopplungsmittel ist, über ein endständiges Sauerstoffatom, ein gegebenenfalls nichtsubstituierter Polyphenylenetherrest (PPE) gebunden. Dieser Polyphenylenetherrest der Seitenkette hat bevorzugt die Formel I, wie für Komponente C, wobei x bevorzugt eine ganze Zahl von 20 bis 200, insbesondere 30 bis 100 ist.

Die Zusammensetzung der Hauptkette des Copolymers E wird bevorzugt an die Zusammensetzung des Styrolcopolymeren Komponente A angepaßt. So ist es vorteilhaft, bei hohen (z.B. 20 - 40 Gew.%) Gehalten an Acrylnitril der Komponente A auch den Gehalt an Acrylnitril in der Hauptkette des Copolymerisates E ähnlich hoch zu wählen.

Die Herstellung der Haupt- und Nebenkette des Copolymeren E ist an sich bekannt (vgl. EP-A-172 516)

Zur Herstellung der Komponente E worden die Terpolymeren der Hauptkette mit Polyphenylenethern (PPE) umgesetzt. Dies geschieht in an sich bekannter Weise durch die in der organischen Chemie üblichen Kopplungsreaktionen für OH-Gruppen, wobei vorzugsweise das PPE erst mit bekannten Kopplungsmitteln und anschließend mit dem Terpolymeren der Hauptkette umgesetzt wird. Die Kopplungsmittel reagieren mit der phenolischen Endgruppe und/oder gegebenenfalls mit $-CH_2OH$-Gruppen, die bei der Herstellung des PPE aus Methylgruppen am aromatischen Ring in untergeordneten Mengen entstehen können, am aromatischen Ring des PPE und haben danach noch eine weitere funktionale Gruppe, um mit dem Terpolymeren zu reagieren. Die Kopplungsreaktion kann in Lösung, Suspension, Schmelze oder Mehrphasenreaktion. wie z.B. Zweiphasenreaktion, bevorzugt mit alkalischem Medium durchgeführt werden. Als Kopplungsmittel eignen sich solche, die sich mit der phenolischen Endgruppe des PPE und mit der Hydroxylgruppe des Terpolymeren umsetzen.

Die Kopplungsmittel werden vorzugsweise zuerst mit dem PPE umgesetzt, wobei sie bevorzugt mit der terminalen -OH-Gruppe des PPE reagieren. Dazu werden bevorzugt alle -OH-Gruppen des PPE umgesetzt, um das PPE mit dem Kopplungsmittel zu funktionalisieren. Die Menge -OH-Gruppen im PPE, welche im allgemeinen eine breite Molekulargewichtsverteilung hat, werden auf bekanntem Weg bestimmt, wie z.B. durch IR-Spektroskopie bei 3460 $cm^{-8}$ oder durch Titration mit Butyllithium, wobei der Endpunkt durch Zusatz von monomerem Styrol und Bildung von Styrolanion bestimmt wird. Die Menge an Kopplungsmittel wird so bemessen, daß vorzugsweise alle OH-Gruppen funktionalisiert werden.

Die vorstehend beschriebene Reaktion wird vorzugsweise in einem nichtreagierenden Lösungsmittel durchgeführt, wie Cyclohexan, Toluol, Tetrahydrofuran. Es ist auch möglich, in einer Zweiphasenreaktion zu arbeiten. Die entstehende Halogenwasserstoffsäure wird entfernt, entweder durch Austreiben oder durch Zusatz eines basischen Materials, vorzugsweise eines tertiären Amins. Diese Reaktion kann bevorzugt zwischen 0 und 150 °C durchgeführt werden. Die Reaktionstemperatur wird nach Basenstärke und Siedepunkt des Lösungsmittels eingestellt.

Das erhaltene, funktionalisierte PPE kann durch Filtrieren und Entfernen des Lösungsmittels aufgearbeitet werden. Es wird mit den hydroxylgruppentragenden Terpolymeren in Lösung. Suspension. Schmelze oder Mehrphasenreaktion. wie Zweiphasenreaktion umgesetzt. Dabei wird vorzugsweise wie beim ersten Schritt umgesetzt, wobei das funktionalisierte PPE-Polymere dem hydroxygruppenhaltigen Terpolymeren auf einmal oder bevorzugt in bis zu 2 Stunden zugegeben wird. Die entstehende Halogenwasserstoffsäure wird ausgetrieben oder durch eine basische Substanz gebunden, bekannt ist z.B. die Verwendung eines tertiären Amins. Es können aber auch andere, säurebindende Substanzen eingesetzt werden. Gegebenenfalls werden die erhaltenen Pfropfcopolymeren durch Abdampfen des Lösungsmittels oder durch Fällen in Methanol gewonnen.

Zusatzstoffe

Die erfindungsgemäße Formmasse kann gegebenenfalls übliche Zusatzstoffe enthalten. Als Zusatzstoffe kommen bekannte und bewährte Stabilisatoren, wie sterisch gehinderte Phenole, in Betracht, die in üblichen Mengen von jeweils 0,01 bis 0.5 Gew.%, bezogen auf die erfindungsgemäße Formmasse, eingesetzt werden. Ferner können Schwefel und/oder Schwefel enthaltende Stabilisatoren, wie Dithiocarbamatkomplexe, Xanthogensäuresalz, Thiazole und Zinksalze von Mercaptobenzimidazolen in üblichen Mengen von jeweils 0,01 bis 0,5 Gew.%, bezogen auf die Gesamtmischung, eingesetzt werden.

Die erfindungsgemäße Formmasse kann außerdem Weichmacher und Verarbeitungshilfsmittel enthalten. Andere bekannte Zusätze sind Glasfasern. Glaskugeln, Kaolin, Quarz, Glimmer, Wollastonit, Talkum, Asbest, Titandioxid, Aluminiumoxid, Micovit, Kreide, calciniertes Aluminiumsilikat, Farbstoffe und Pigmente.

Die Herstellung der erfindungsgemäßen Formmasse aus den Komponenten sowie den eventuell zu verwendenden Zusatzstoffen kann nach geeigneten und bekannten Mischverfahren, z.B. in Extrudern, Knetern oder Walzen erfolgen. Insbesondere können die Komponenten B, D und E der erfindungsgemäßen Formmasse getrennt in Form von Pulvern oder in Form einer pulverisierten Mischung oder als Konzentrat in einem der Thermoplasten (vorzugsweise Komponente A) in den anderen Thermoplasten (Komponente C) eingearbeitet werden, um die beabsichtigte Zusammensetzung zu erzielen.

Die erfindungsgemäßen Formmassen können durch Spritzgießen oder Strangpressen zu selbstverlöschenden Formkörpern oder Profilen verarbeitet werden.

Die erfindungsgemäßen Formmassen zeichnen sich außer durch ihre Eigenschaften der Selbstverlöschung, der guten Transparenz und dem Nichtauftreten von Abtropfen beim Brennen auch noch durch gute mechanische Eigenschaften aus. Durch den hohen Acrylnitrilgehalt, der bei den erfindungsgemäßen Einstellungen verwendet werden kann, ist ferner eine verbesserte Lösungsmittelbeständigkeit gegenüber Abmischungen aus PPE und HIPS offensichtlich.

Überraschend und auch nicht vorhersehbar war, daß z.B. durch die Anwendung von Komponente E die Menge an zum Erreichen der Einstufung UL 94 V0 oder UL 94 V1 notwendigen Phosphorverbindungen (Komponente D) abgesenkt werden konnte.

Die in den Beispielen und Vergleichsversuchen erwähnten Brandtests wurden wie folgt durchgeführt:

1. Die Flammschutzprüfung erfolgt im vertikalen Brandtest nach den Vorschriften der Unterwriter Laboratories zwecks Einordnung in eine der Brandklassen UL 94 V0, V1 oder V2.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen, vollständiges Abbrennen oder ein Nachglühen von länger als 30 Sek. erfolgen. Die Einstufung in die Brandklasse UL 94 V1 erfordert, daß die Nachbrennzeiten nicht länger als 30 Sek. sind und daß die Summe der Nachbrennzeiten von 10 Beflammungen von 5 Proben nicht größer als 250 Sek. ist. Das Nachglühen darf nie länger als 60 Sek. dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

2. Die Transparenz von Teststäbchen wurde visuell beurteilt und wie folgt benotet: sehr gut, gut, mäßig, schlecht.

Fur die Durchführung von Versuchen wurden die nachstehend beschriebenen Stoffe hergestellt bzw. verwendet.

Komponente A

$A_1$: Styrol-Acrylnitril-Copolymerisat (= SAN) mit 25 Gew.% AN: Viskositätszahl VZ = 101 (alle VZ-Angaben beziehen sich auf Werte, die in 0.5 %iger Lösung in Dimethylformamid bei 25 °C gemessen wurden).

$A_2$: SAN mit 35 % Acrylnitril; VZ = 80.

Komponente B

$B_7$: 60 % Poly(butadien)kautschuk, gepfropft mit 40 % Styrol/Acrylnitril im Verhältnis (65/35).

Komponente C

$C_1$: Poly(2,6-dimethylen-1,4-phenylen)ether, [hergestellt nach US-PS 3 914 266 (8)] Grenzviskosität $[\eta]$ = 0.60, gemessen bei 25 °C in Chloroform.

Komponente D

$D_1$-$D_3$: Die erfindungsgemäß eingesetzten Flammschutzmittel Triphenylphosphinoxid, Triphenylphosphat und Mobil Antiblaze waren handelsübliche Produkte.

$D_4$: Methylphosphonsäureneopentylester

1,240 kg (≙ 10 Mol) Dimethylmethylphosphonat werden mit 1,040 kg (≙ 10 Mol) Neopentylglykol und 0,0495 kg $MgCl_2$ aufgeschmolzen und so lange bei 180 bis 190 °C gerührt, bis kein Methanol mehr abdestilliert (ca. 10 bis 16 Stunden).
Ausbeute (lt. Gaschromatographie): 90 %;
Festpunkt: 121 - 123 °C;
Eigenschaften: weiße kristalline Substanz, geruchfrei.

$D_5$: Dimethylpentaerythritdiphosphonat

Die Synthese der Verbindung erfolgt nach GB-PS 2 083 042.
Fp.: 236 - 242 °C;
In der Tabelle werden folgende Abkürzungen verwendet:

| | |
|---|---|
| Triphenylphosphinoxid | = $D_1$ |
| Triphenylphosphat | = $D_2$ |
| Mobil Antiblaze 19(R) | = $D_3$ |
| Methylphosphonsäureneopentylester | = $D_4$ |
| Dimethylpentaerythritdiphosphonat | = $D_5$ |

$E_1$: 100 g PPE (hergestellt gemäß US-PAT 3 914 266, mit einer Grenzviskosität von $[\eta]$ = 0,60 dl/g, gemessen bei 25 °C im Chloroform) werden mit Dimethyldichlorsilan in Toluol unter Verwendung von Tributylamin als Säurefänger umgesetzt. Das Umsetzungsprodukt wird anschließend zu 100 g eines Styrolcopolymerisats (bestehend aus 72 Gew.% Styrol, 25 % Acrylnitril und 3 Gew.% Hydroxibutylacrylat, mit einem $\overline{M}_w$ = 60.000, hergestellt durch kontinuierliche Polymerisation) in Toluol unter Verwendung von Tributylamin als Säurefänger in 20 Min. zulaufen lassen. Man erhält das Pfropfpolymere (Copolymere aus Haupt- und Seitenketten) durch Entfernen des Lösungsmittels.

$E_2$: 100 g PPE (gemäß $E_1$) werden mit Dimethyldichlorsilan umgesetzt. Das Umsetzungsprodukt wird anschließend zu 120 g eines Styrolcopolymerisats (gemäß $E_1$), in Toluol zulaufen lassen. Das erhaltene Copolymere ($E_2$) wird zur Herstellung der erfindungsgemäßen Abmischungen benutzt.

$E_3$: 100 g PPE (gemäß $E_1$) werden mit Dimethyldichlorsilan in Toluol umgesetzt. Das Umsetzungsprodukt wird anschließend zu 100 g eines Styrolcopolymerisats (berechnet aus 62 Gew.% Styrol. 35 % Acrylnitril und 3 Gew.% Hydroxybutylàcrylat, mit einem $\overline{M}_w$ = 60.000, hergestellt durch kontinuierliche Polymerisation) zugegeben. Man erhält das Copolymere ($E_3$).

Zusatzstoffe

Folgende handelsübliche Produkte wurden in den Beispielen bzw. Vergleichsversuchen eingesetzt:

| | |
|---|---|
| 2,6-Di-t-butylkresol | = $F_1$ *) |
| Tris(2,4-di-t-butylphenyl)phosphit | = $F_2$ |
| Tris(2,4-di-t-butylphenyl)phosphit | = $F_3$ |
| 2-Mercaptobenzthiazol | = $F_4$ |
| Tinuvin 622 LD® (Ciba-Geigy) | = $F_5$ |
| Wingstay 200 ® (Goodyear) | = $F_6$ |
| $TiO_2$ | = $F_7$ |

+) $F_1$ bis $F_7$ Abkürzung in der Tabelle

Beispiele 1 bis 10 und Vergleichsbeispiele A bis H

Die Erfindung wird nachstehend anhand der Beispiele näher erläutert. Die in den Beispielen und Versuchen genannten Prozente beziehen sich, sofern nichts anderes vermerkt ist, auf das Gewicht der jeweils betrachteten Gesamtmischung.

Die in der Tabelle angegebenen Mengen in Gewichtsprozent an Flammschutzmittel (Komponente D) und gegebenenfalls die Zusatzstoffe F wurden in einem Fluidmischer der Firma Henschel, Kassel, bei 40 °C gemischt. Das Gemisch aus diesen Komponenten wurde dann mit den in der Tabelle 1 angegebenen

Mengen (in Gewichtsprozent) an thermoplastischen Harzen (Komponenten A + C), sowie gegebenenfalls dem Schlagzähmodifier (Komponente B) auf einem Extruder bei 230 bis 260° C aufgeschmolzen, homogenisiert und anschließend granuliert.

Vom Granulat wurden Standardteststäbchen für den UL 94-Test spritzgegossen.

<u>Tabelle</u>

| Beispiel | Komponente | | | | | | Einstufung | Abtropfen | | Transparenz |
|---|---|---|---|---|---|---|---|---|---|---|
| Nr. | A Gew.% | B Gew.% | C Gew.% | D Gew.% | E Gew.% | F Gew.% | UL 94 | n.br.[1] | br.[2] | |
| 1 | $A_1$,33 | 0 | $C_1$,49,4 | $D_1$,12,5 | $E_1$, 5 | $F_3$, 0,1 | V1 | nein | nein | mäßig |
| 2 | $A_1$,31,2 | 0 | $C_1$,46,7 | $D_1$,12 | $E_1$,10 | $F_3$, 0,1 | V0 | nein | nein | gut |
| 3 | $A_1$,28 | 0 | $C_1$,41,9 | $D_1$,10 | $E_1$,20 | $F_3$, 0,1 | V0 | nein | nein | sehr gut |
| 4 | $A_2$,34 | $B_7$,20 | $C_1$,40,7 | $D_2$,14 | $E_3$,15 | $F_2$, 0,2 | | | | |
| | | | | | | $F_5$, 0,1 | V1 | nein | nein | mäßig |
| 5 | $A_2$, 3,3 | $B_7$,20 | $C_1$,40 | $D_2$,14 | $E_3$,15 | $F_6$, 0,2 | | | | |
| | | | | | | $F_7$, 7,5 | V1 | nein | nein | - |
| 6 | $A_1$,43,1 | 0 | $C_1$,28,8 | $D_4$,10 | $E_2$,18 | $F_1$, 0,1 | V1 | nein | nein | gut |
| 7 | $A_1$,40,8 | 0 | $C_1$,27,1 | $D_4$,14 | $E_2$,18 | $F_1$, 0,1 | V0 | nein | nein | gut |
| 8 | $A_1$,32,35 | 0 | $C_1$,32,4 | $D_3$, 2,5 | $E_2$,25 | $F_2$, 0,15 | | | | |
| | | | | $D_5$, 7,5 | | $F_4$, 0,1 | V0 | nein | nein | sehr gut |
| 9 | $A_2$,23,8 | $B_7$,20 | $C_1$,23,5 | $D_2$, 2,5 | $E_3$,20 | $F_3$, 0,2 | | | | |
| | | | | $D_5$,10 | | | V0 | nein | nein | mäßig |
| 10 | $A_2$,37 | 0 | $C_1$,38 | $D_2$,15 | $E_3$,20 | 0 | V1 | nein | nein | sehr gut |
| Vergleichsversuche | | | | | | | | | | |
| A | $A_1$,33,9 | 0 | $C_1$,51 | $D_2$,15 | 0 | $F_3$, 0,1 | keine | ja | ja | mäßig schlecht |
| B | $A_1$,53,9 | 0 | $C_1$,36 | $D_5$,10 | 0 | $F_1$, 0,1 | keine | ja | ja | schlecht |
| C | $A_1$,42,4 | 0 | $C_1$,42,4 | $D_4$,15 | 0 | $F_3$, 0,2 | keine | ja | ja | schlecht |
| D | $A_1$,27,9 | 0 | $C_1$,42 | 0 | $E_1$,30 | $F_2$, 0,1 | keine | ja | ja | sehr gut |
| E | $A_1$,41,8 | 0 | $C_1$,27,95 | 0 | $E_1$,30 | $F_3$, 0,15 | | | | |
| | | | | | | $F_4$, 0,1 | keine | ja | ja | sehr gut |
| F | $A_1$,42 | 0 | $C_1$,27,9 | 0 | $E_1$,30 | $F_2$, 0,1 | keine | ja | ja | sehr gut |
| G | $A_1$,19,9 | $B_7$,20 | $C_1$,40 | $D_2$,10 | 0 | $F_2$, 0,1 | | | | |
| | | | | $D_4$,10 | | | keine | ja | ja | schlecht |
| H | $A_2$,19,9 | $B_7$,20 | $C_1$,40 | 0 | $E_3$,20 | $F_2$, 0,1 | keine | ja | ja | gut-mäßig |

[1] = nicht brennend; [2] = brennend;

## Patentansprüche

1. Halogenfreie, selbstverlöschende thermoplastische Formmasse, enthaltend, jeweils bezogen auf die Summe Von 100 Gew.% aus A, B, C, D und E,
   A mindestens 3 Gew.% mindestens eines halogenfreien thermoplastischen Harzes, das, bezogen auf A, einpolymerisiert enthält
      $a_1$) 60 bis 85 Gew.% mindestens eines vinylaromatischen Monomeren mit 8 bis 9 C-Atomen und
      $a_2$) 40 bis 15 Gew.% Von Acrylnitril,
   B bis zu 40 Gew.% eines Elastomeren mit einer Glastemperatur unterhalb von 0 °C, das gegebenenfalls in Form eines Pfropfmischpolymerisates gebildet aus Monomeren $a_1$) und $a_2$) der Komponente A vorliegt,
   C mindestens 3 Gew.% mindestens eines thermoplastischen Polyphenylenethers,
   D 0,5 bis 40 Gew.% mindestens einer organischen oder anorganischen, Phosphor enthaltenden Verbindung, in der der Phosphor die Wertigkeitsstufe -3 bis +5 besitzt (Flammschutzmittel), sowie
   E mindestens 0,3 Gew.% mindestens eines Copolymerisates, das zu 20 bis 85 Gew.% aus einer Hauptkette und zu 15 bis 80 Gew.% mindestens einer daran durch Kondensation angefügten Seitenkette besteht,

   wobei das Gesamtmolekulargewicht $M_w$ des Copolymerisates 7000 bis 10 Mio, das der Hauptkette 10 000 bis 1 Mio und das der Seitenkette(n) jeweils ein solches von 2000 bis 22 000 aufweisen, jeweils bestimmt durch Gelpermeationschromatographie,

   wobei ferner die Hauptkette ein Terpolymerisat darstellt, das einpolymerisiert enthält:
      $e_a$) mindestens 60 Gew.% mindestens eines vinylaromatischen Monomeren mit 8 oder 9 C-Atomen,
      $e_b$) 40 bis 9 Gew.% Acrylnitril
      $e_c$) 0,3 bis 10 Gew.% mindestens eines Monomeren aus der Gruppe der Ester der Acrylsäure und Methacrylsäure, die zur Etherbildung befähigte Alkoholreste enthalten,
   und wobei jede Seitengruppe mindestens einen Polyphenylenetherrest (PPE) aufweist, der jeweils über den Rest X eines mindestens bifunktionellen Kupplungsmittels an das (die) zur Etherbildung befähigte(n) Monomere(n) ($e_c$) gebunden ist derart, daß sich für die Seitengruppe eine Struktur -X-PPE ergibt.

2. Formmasse nach Anspruch 1, enthaltend als Polyphenylenether solche der allgemeinen Formel (I)

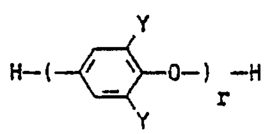

(I)

   in der stehen:

   Y für einen monovalenten Substituenten wie H oder Kohlenwasserstoffreste mit 1 bis 25 C-Atomen oder Alkoxireste mit 1 bis 20 C-Atomen

   r für ganze Zahlen von 20 bis 200, insbesondere 30 bis 100.

3. Formmasse nach Anspruch 1, enthaltend als vinylaromatisches Monomeres $e_a$) Styrol und als Monomeres $e_c$) Hydroxibutylacrylat.

4. Verwendung der Formmasse nach Anspruch 1 zur Herstellung von Formteilen.

**Claims**

1. A halogen-free, self-extinguishing, thermoplastic molding composition containing, in each case based on the sum of 100% by weight of A, B, C, D and E,
   A at least 3% by weight of at least one halogen-free thermoplastic resin which contains, based on A,
      $a_1$) from 60 to 85% by weight of at least one vinyl-aromatic monomer having 8 to 9 carbon atoms, and

$a_2$) from 40 to 15% by weight of acrylonitrile, in copolymerized form
B up to 40% by weight of an elastomer which has a glass transition temperature below 0° C and may be in the form of a graft copolymer formed from monomers $a_1$) and $a_2$) of component A,
C at least 3% by weight of at least one thermoplastic polyphenylene ether,
D from 0.5 to 40% by weight of at least one organic or inorganic, phosphorus-containing compound in which the phosphorus is in an oxidation state of from -3 to +5 (flameproofing agent) and
E at least 0.3% by weight of at least one copolymer which comprises from 20 to 85% by weight of a main chain and from 15 to 80% by weight of at least one side chain added thereto by condensation, the overall molecular weight $M_w$ of the copolymer being from 7000 to 10 million, that of the main chain being from 10,000 to 1 million and that of the side chain(s) in each case being from 2,000 to 22,000, in each case determined by gel permeation chromatography,
and furthermore the main chain being a terpolymer which contains, in copolymerized form:
$e_a$) at least 60% by weight of at least one vinyl-aromatic monomer having 8 or 9 carbon atoms,
$e_b$) from 40 to 9% by weight of acrylonitrile and
$e_c$) from 0.3 to 10% by weight of at least one monomer from the group comprising the esters of acrylic acid and methacrylic acid which contain alcohol radicals which are capable of forming ethers,
and each side group containing at least one polyphenylene ether radical (PPE) which is in each case bonded, via the radical X of an at least bifunctional coupling agent, to the monomer(s) ($e_c$) capable of forming ethers in such a manner that a structure -X-PPE is formed for the side group.

2. A molding composition as claimed in claim 1, wherein the polyphenylene ether has the general formula (I)

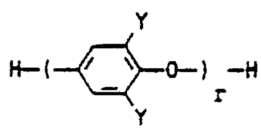

where
Y is a monovalent substituent, such as H or a hydrocarbon radical having 1 to 25 carbon atoms or an alkoxy radical having 1 to 20 carbon atoms and
r is an integer from 20 to 200, in particular from 30 to 100.

3. A molding composition as claimed in claim 1, wherein the vinylaromatic monomer $e_a$) is styrene and the monomer $e_c$) is hydroxybutyl acrylate.

4. The use of a molding composition as claimed in claim 1 for the production of moldings.

## Revendications

1. Mélange à mouler thermoplastique, autoextinguible, sans halogène, contenant, les quantités étant exprimées en pourcentage en poids par rapport au total de A, B, C, D et E :
A) au moins 3 % en poids d'au moins une résine thermoplastique sans halogène, et qui, par rapport à A, contient copolymérisées les quantités suivantes de monomères :
$a_1$) 60 à 85 % en poids d'au moins un monomère vinylaromatique ayant 8 à 9 atomes de carbone, et
$a_2$) 40 à 15 % en poids d'acrylonitrile,
B) jusqu'à 40 % en poids d'un élastomère ayant une température de transition vitreuse inférieure à 0° C, qui se présente éventuellement sous la forme d'un copolymère greffé constitué des monomères $a_1$) et $a_2$) du composant A,
C) au moins 3 % en poids d'au moins un polyphénylène-éther thermoplastique,
D) 0,5 à 40 % en poids d'au moins un composé phosphoré, organique ou minéral, dans lequel le phosphore a un degré d'oxydation de -3 à +5 (agent retardateur de flamme), et
E) au moins 0,3 % en poids d'au moins un copolymère constitué pour 20 à 85 % en poids d'une chaîne principale, et pour 15 à 80 % en poids d'au moins une chaîne latérale fixée à la chaîne principale par condensation,

la masse moléculaire totale $M_w$ du copolymère étant de 7000 à 10 millions, celle de la chaîne principale étant de 10 000 à 1 million, et celles de la ou des chaînes latérales étant chacune de 2000 à 22 000, toutes les masses moléculaires étant déterminées par chromatographie par perméation de gel,

la chaîne principale représentant en outre un terpolymère contenant, copolymérisés :

$_{ea}$) au moins 60 % en poids d'au moins un monomère vinylaromatique ayant 8 à 9 atomes de carbone,

$e_b$) 40 à 9 % en poids d'acrylonitrile,

$e_c$) 0,3 à 10 % en poids d'au moins un monomère choisi dans l'ensemble comprenant les esters de l'acide acrylique et de l'acide méthacrylique, qui contiennent des résidus alcool pouvant former des éthers,

chaque groupe latéral comportant au moins un résidu polyphénylène-éther (PPE), dont chacun est, par l'intermédiaire du résidu X d'un agent de couplage au moins bifonctionnel, fixé au ou aux monomères ($e_c$) pouvant former des éthers, de façon que l'on obtienne pour le groupe latéral une structure -X-PPE.

**2.** Mélange à mouler selon la revendication 1, contenant en tant que polyphénylène-éther des polyphénylène-éthers de formule générale (I)

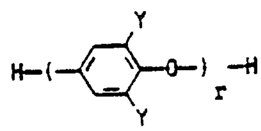

(I)

dans laquelle :

Y est un substituant monovalent, tel que H ou un résidu hydrocarboné ayant de 1 à 25 atomes de carbone, ou un radical alcoxy ayant 1 à 20 atomes de carbone,

r est un nombre entier de 20 à 200, notamment de 30 à 100.

**3.** Mélange à mouler selon la revendication 1, contenant comme monomère vinylaromatique $_{ea}$) du styrène et comme monomère $e_c$) de l'acrylate d'hydroxybutyle.

**4.** Utilisation du mélange à mouler selon la revendication 1 pour la fabrication de pièces moulées.